(19) Europäisches Patentamt / European Patent Office / Office européen des brevets

(11) **EP 3 869 599 B1**

(12) **EUROPEAN PATENT SPECIFICATION**

(45) Date of publication and mention
of the grant of the patent:
**18.12.2024 Bulletin 2024/51**

(21) Application number: **20777067.8**

(22) Date of filing: **04.03.2020**

(51) International Patent Classification (IPC):
*H01M 8/04014* (2016.01)    *H01M 8/04089* (2016.01)
*H01M 8/04746* (2016.01)    *H01M 8/04119* (2016.01)
*H01M 8/18* (2006.01)    *H01M 8/04701* (2016.01)
*C25B 1/04* (2021.01)    *C25B 15/021* (2021.01)
*C25B 15/08* (2006.01)    *H01M 8/12* (2016.01)

(52) Cooperative Patent Classification (CPC):
**H01M 8/186; C25B 1/04; C25B 15/021;
C25B 15/08; H01M 8/04014; H01M 8/04022;
H01M 8/04089; H01M 8/04097; H01M 8/04104;
H01M 8/04126; H01M 8/04164;** H01M 2008/1293;
Y02E 60/36; Y02E 60/50

(86) International application number:
**PCT/KR2020/003047**

(87) International publication number:
**WO 2020/197120 (01.10.2020 Gazette 2020/40)**

(54) **REVERSIBLE WATER ELECTROLYSIS SYSTEM AND METHOD FOR OPERATING SAME**

UMKEHRBARES WASSERELEKTROLYSESYSTEM UND VERFAHREN ZUM BETRIEB DAVON

SYSTÈME RÉVERSIBLE D'ÉLECTROLYSE DE L'EAU ET SON PROCÉDÉ DE FONCTIONNEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.03.2019 KR 20190033817
25.03.2019 KR 20190033833**

(43) Date of publication of application:
**25.08.2021 Bulletin 2021/34**

(73) Proprietor: **Korea Institute of Machinery &
Materials
Daejeon 34103 (KR)**

(72) Inventors:
• **AHN, Kook-Young
Daejeon 34179 (KR)**

• **LEE, Youngduk
Daejeon 35213 (KR)**
• **KIM, Youngsang
Daejeon 34198 (KR)**
• **GIAP, Van Tien
Daejeon 34946 (KR)**

(74) Representative: **Gaunt, Thomas Derrick et al
Lewis Silkin LLP
Arbor
255 Blackfriars Road
London SE1 9AX (GB)**

(56) References cited:
EP-A1- 3 054 519        WO-A1-2018/044589
KR-A- 20030 075 944     KR-A- 20090 108 104
KR-A- 20140 026 866     KR-B1- 101 925 290
US-A1- 2012 282 534     US-B2- 8 637 197

**Description**

BACKGROUND

1. Field of Disclosure

The present disclosure of invention relates to a reversible water electrolysis system and a method for operating the reversible water electrolysis system, and more specifically the present disclosure of inventions relates to a reversible water electrolysis system and a method for operating the reversible water electrolysis system, capable of controlling a pressure difference between an inlet of a hydrogen pole of a fuel cell and an inlet of an air pole to operate the system more stably or to increase the efficiency of the system.

2. Description of Related Technology

Recently, researches on a generating system using a intermittent energy source such as a solar cell, a wind power and so on, have been developed. In the generating system using the intermittent energy source, the output of power is changed according to the circumstances, and thus a spare power over a necessary power should be properly stored and the stored power should be properly used. For example, a water electrolysis system has been developed. When the spare power over the necessary power is generated from the intermittent energy source generating system, the water electrolysis system is used to generate and to store hydrogen, and then the stored hydrogen is used to provide energy or chemical energy to the fuel cell when the generating system power is decreased.

In a reversible water electrolysis system based on a high temperature water electrolysis and fuel cell technology, a heat source is necessary to form an operating circumstance over about 700°C and a high temperature vapor. Thus, in the reversible water electrolysis system, the operating circumstance is necessary to be maintained in the high temperature and an exhausted heat exhausted in the water electrolysis system is necessary to be used more efficiently. Accordingly, the system efficiency of the reversible water electrolysis system may be enhanced.

Related prior art includes KR 101 925 290 B1 and KR 2009 0108104 A.

SUMMARY

The present invention is developed to solve the above-mentioned problems of the related arts. The present invention provides a reversible water electrolysis system capable of increasing system efficiency and capacity using thermal energy more efficiently.

In addition, the present invention also provides a method for operating the reversible water electrolysis system.

According to an example embodiment, the reversible water electrolysis system includes a reversible water electrolysis fuel cell, a first heat exchanger, a steam supply passage, a water discharger and a pump. The reversible water electrolysis fuel cell has a hydrogen pole, an air pole and an electrolyte disposed between the hydrogen pole and the air pole. The reversible water electrolysis fuel cell is configured to be operated at one of a water electrolysis mode and a fuel cell mode. The first heat exchanger is configured to exchange a heat between a first exhaust gas exhausted from the hydrogen pole and a hydrogen or a mixed gas including the hydrogen and a steam. The hydrogen or the mixed gas is supplied to the hydrogen pole. The steam supply passage is configured to supply the steam to the hydrogen pole. The water discharger is configured to removing a water from the first exhaust gas. The pump is equipped to a water discharge passage L43 of the water discharge and is configured to pump the water to outside. The pump is configured to maintain a pressure difference between an inlet of the hydrogen pole and an inlet of the air pole within a predetermined range.

In an example, the reversible water electrolysis system may further include a recycling passage configured to at least partially resupply a gas passing through the water discharger to the hydrogen pole as a recycling gas, a second heat exchanger equipped to the recycling passage and configured to exchange a heat between the recycling gas and the first exhaust gas, and a blower disposed at a downstream of the second heat exchanger 42 along the recycling passage.

The second heat exchanger is configured to increase the temperature of the recycling gas to be a predetermined range.

In an example, the reversible water electrolysis system may further include a third heat exchanger configured to exchange a heat between an outer supply water supplied from outside and the first exhaust gas. The outer supply water evaporated to be the steam at the third heat exchanger may inflow to the steam supply passage.

In an example, a conflux between the steam supply passage and a hydrogen supply passage supplying the hydrogen to the hydrogen pole may be disposed between the first heat exchanger and the hydrogen pole, or at a front side of the first heat exchanger.

In an example, the reversible water electrolysis system may further include first and second blowers and connected in parallel with an air supply passage which supplies the air to the air pole, and a fourth heat exchanger configured to exchange a heat between the air supplied to the air pole via the air supply passage and a second exhaust gas exhausted at the air pole. The second blower is configured to supply the air more than the first blower.

In an example, the reversible water electrolysis system may further include a feedback passage configured to connect the air supply passage with an exhaust passage of the air pole, and a third blower equipped to the feedback passage. The second exhaust gas may be partially recycled to the air pole via the feedback passage.

In an example, the first blower may be operated at the water electrolysis mode, and the second blower and the third blower may be operated at the fuel cell mode.

In an example, the reversible water electrolysis system may further include a bifurcation passage configured to partially bifurcate the first exhaust gas, to supply the bifurcated first exhaust gas to an exhaust passage of the air pole, and a catalytic combustor equipped at a conflux between the bifurcation passage and the exhaust passage of the air pole. The catalytic combustor may heat the second exhausted from the air pole.

In an example, the bifurcation passage may be closed at the water electrolysis mode, and the bifurcation passage may be open at the fuel cell mode.

According to another example embodiment, in a method for operating a reversible water electrolysis system, the reversible water electrolysis system is operated at a water electrolysis mode and a fuel cell mode using a reversible water electrolysis fuel cell having a hydrogen pole and an air pole. In the method, a heat is exchanged between a first exhaust gas and a hydrogen so as to heat the hydrogen using the first exhaust gas, at a first heat exchanger. A water is separated from the first exhaust gas passing through the first heat exchanger. The separated water is discharged to outside using a drain pump. The first exhaust gas from which the water is removed is at least partially recycled to the hydrogen pole as a recycling gas

In an example, in the discharging the separated water, an operation of the drain pump may be controlled to maintain a pressure difference between an inlet of the hydrogen pole and an inlet of the air pole within a predetermined range.

In an example, a second heat exchanger and a blower may be sequentially equipped along a passage for recycling the recycling gas. The second heat exchanger may exchange a heat between the recycling gas and the first exhaust gas passing through the first heat exchanger, to heat the recycling gas.

In an example, in the method, a heat may be exchanged between an air supplied from one of first and second blowers and a second exhaust gas exhausted from the air pole, to heat the air. A capacity of the second blower may be larger than that of the first blower. The heated air may be supplied to the air pole. The second exhaust gas exhausted from the air pole may be at least partially resupplied to the air pole, using a third blower.

In an example, at the water electrolysis mode, the first blower may be operated, and at the fuel cell mode, the second blower and the third blower may be operated.

In an example, in the method, a heat may be exchanged between an air supplied from one of first and second blowers and a second exhaust gas exhausted from the air pole, to heat the air. A capacity of the second blower may be larger than that of the first blower. The heated air may be supplied to the air pole. The first exhaust gas exhausted from the hydrogen pole may be partially bifurcated via a bifurcation passage, to interflow to the second exhaust gas. The second exhaust gas mixed with the first exhaust gas may be heated using a catalytic combustor.

In an example, the bifurcation passage may be closed at the fuel cell mode, and the bifurcation passage may be open at the fuel mode.

According to the present example embodiments, the water is separated from the exhaust gas exhausted from the hydrogen pole of the fuel cell and then the water is discharged using the drain pump. Here, the operation of the drain pump is properly controlled to maintain a pressure difference between the inlet of the hydrogen pole of the fuel cell and the inlet of the air pole within a predetermined range, so that the fuel cell may be operated stably and more efficiently.

In addition, the exhaust gas exhausted from the air pole is partially resupplied to the air pole, or the exhaust gas exhausted from the air pole is heated using the exhaust gas from the hydrogen pole, so that a balance of plant (BOP) may be minimized and power consumption may be decreased to enhance an efficiency of the system.

In addition, an exhaust gas from the hydrogen pole is partially used as a fuel of the catalytic combustor so as for heating the exhaust gas of the air pole, so that the temperature of the exhaust gas of the air pole is increased and an increased energy is transmitted to the air. Thus, power consumption of a heat for heating the air supplied to the air pole may be decreased and system efficiency may be increased.

BRIEF DESCRIPTION OF THE DRAWINGS

FIG. 1 is a schematic diagram illustrating a reversible water electrolysis system according to a first example embodiment of the present invention;

FIG. 2 is a schematic diagram illustrating a SOEC mode of the reversible water electrolysis system of FIG. 1;

FIG. 3 is a schematic diagram illustrating a SOFC mode of the reversible water electrolysis system of FIG. 1;

FIG. 4 is a schematic diagram illustrating a reversible water electrolysis system according to a second example embodiment of the present invention;

FIG. 5 is a schematic diagram illustrating a SOEC mode of the reversible water electrolysis system of FIG. 4;

FIG. 6 is a schematic diagram illustrating a SOFC mode of the reversible water electrolysis system of FIG. 4;

FIG. 7 is a schematic diagram illustrating a reversible water electrolysis system according to a third example embodiment of the present invention;

FIG. 8 is a schematic diagram illustrating a reversible water electrolysis system according to a fourth example embodiment of the present invention;

FIG. 9 is a schematic diagram illustrating a reversible water electrolysis system according to a fifth example embodiment of the present invention;

FIG. 10 is a schematic diagram illustrating a SOEC mode of the reversible water electrolysis system of FIG. 9;

FIG. 11 is a schematic diagram illustrating a SOFC mode of the reversible water electrolysis system of FIG. 9; and

FIG. 12 is a schematic diagram illustrating a reversible water electrolysis system according to a sixth example embodiment of the present invention.

* Reverence numerals

| 10 : | steam generator | 30 : | reversible water electrolysis fuel cell |
|---|---|---|---|
| 41, 42, 43, 44, 53 : | heat exchanger | 45, 51, 52, 55, 73 : | blower |
| 57 : | catalytic combustor | 61, 62 : | heater |
| 77 : | drain pump | | |

## DETAILED DESCRIPTION

The invention is described more fully hereinafter with Reference to the accompanying drawings, in which embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. In the drawings, the size and relative sizes of layers and regions may be exaggerated for clarity.

The terminology used herein is for the purpose of describing particular embodiments only and is not intended to be limiting of the invention. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Unless otherwise defined, all terms (including technical and scientific terms) used herein have the same meaning as commonly understood by one of ordinary skill in the art to which this invention belongs.

It will be further understood that terms, such as those defined in commonly used dictionaries, should be interpreted as having a meaning that is consistent with their meaning in the context of the relevant art and will not be interpreted in an idealized or overly formal sense unless expressly so defined herein. The invention is described more fully hereinafter with reference to the accompanying drawings, in which embodiments of the invention are shown.

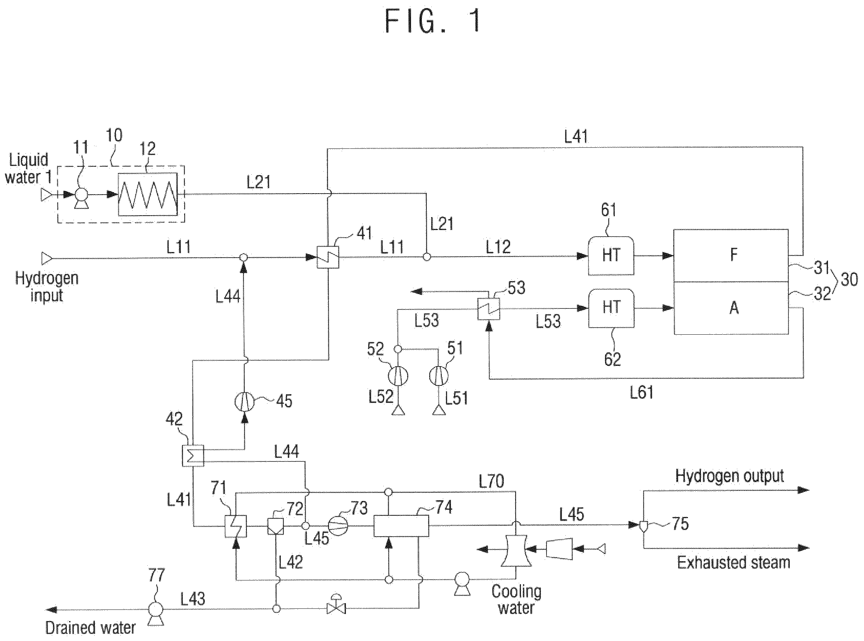

FIG. 1 is a schematic diagram illustrating a reversible water electrolysis system according to a first example embodiment of the present invention.

Referring to FIG. 1, the reversible water electrolysis system according to the present example embodiment includes a steam generator 10, a reversible water electrolysis fuel cell 30, heaters 61 and 62, a plurality of passages connecting the above mentioned elements, a plurality of heat exchangers disposed at the passages, a blower, and a pump.

The reversible water electrolysis fuel cell 30 is operated at one of a water electrolysis mode and a fuel cell mode. At the water electrolysis mode, hydrogen and oxygen are generated using a steam and an electricity provided from outside. At the fuel cell mode, the electricity and a water are generated using a chemical reaction between the hydrogen and the oxygen provided from outside.

The reversible water electrolysis fuel cell 30 may be performed as an arbitrary fuel cell such as solid oxide fuel cell (SOFC), molten carbonate fuel cell (MCFC), and so on. For convenience of explanation, hereinafter, the reversible water electrolysis fuel cell 30 is assumed to be performed as the SOFC.

The reversible water electrolysis fuel cell 30 includes a hydrogen pole 31, an air pole 32 and an electrolyte disposed between the hydrogen pole 31 and the air pole 32.

At the water electrolysis mode (hereinafter, a SOEC mode), a steam $H_2O$ is supplied to the hydrogen pole 31 from outside, and the hydrogen pole 31 generates hydrogen $H_2$. The hydrogen pole 31 receives the steam $H_2O$ via a passage L21 and generates the hydrogen Hz, and the hydrogen pole 31 exhausts a gas including the generated hydrogen $H_2$ and the steam $H_2O$ not transformed into the hydrogen $H_2$ via a passage L41, as a first exhaust gas.

At the SOEC mode, the air pole 32 receives the oxygen $O_2$ from the hydrogen pole 31, and transfers the oxygen $O_2$ via a passage L53 using an air supplied from outside. The air pole 32 exhausts a gas including the oxygen $O_2$ and the air via a passage L61, as a second exhaust gas.

At the fuel cell mode (hereinafter, a SOFC mode), the hydrogen pole 31 generates a water (steam) via a chemical reaction between the hydrogen supplied from the passage L11 and the oxygen supplied from the air pole 32, and the hydrogen pole 31 exhausts a gas including the generated steam and the hydrogen not transformed into the steam, as an exhaust gas.

At the SOFC mode, the air pole 32 receives the air via the passage L53 and supplies the oxygen to the hydrogen pole 31 via the electrolyte. The air pole 32 exhausts nitrogen $N_2$ and the air via the passage L61, as the second exhaust gas.

Theoretically, at the SOEC mode, the water (steam) and the electricity are supplied to the fuel cell 30, and at the SOFC mode, the hydrogen and the oxygen are supplied to the fuel cell 30. However, in an actual operation for the system, to increase fuel cell performance and to avoid damage to the SOFC fuel cell at each of the SOEC mode and the SOFC mode, the mixed gas including the hydrogen and the steam may be supplied to the fuel cell 30.

Here, at the SOEC mode, the steam is mainly required and thus the mixed gas in which the steam and the hydrogen are mixed by a mass ratio of 80:1 (a volume ratio of about 8.9:1) is supplied to the fuel cell 30. At the SOFC mode, the hydrogen is mainly required and thus the mixed gas in which the hydrogen and the steam are mixed by a mass ratio of 3.6:1 (a volume ratio of about 32:1) is supplied to the fuel cell 30.

The mixed ratio between the steam and the hydrogen may be variously changed at each of the SOEC mode and the SOFC mode. In addition, to control the mixed ratio between the steam and the hydrogen differently according to the selected mode, although not shown in the figure, the blower, the pump or/and a flow control valve may be equipped at at least one of the hydrogen supply passage L11 and the steam supply passage L21 to control an amount of the supplied hydrogen or/and an amount of the supplied steam.

In the present example embodiment, the hydrogen is supplied to the fuel cell 30 via the hydrogen supply passage L11. For example, the hydrogen supply passage L11 may be connected to a hydrogen storage tank (not shown). The hydrogen flowed into the hydrogen supply passage L11 is heated at a first heat exchanger 41. The first heat exchanger 41 exchanges a heat between the hydrogen supplied to the hydrogen pole 31 of the fuel cell 30 and the exhaust gas exhausted from the hydrogen pole 31. Here, the hydrogen supplied to the hydrogen pole 31 may be at a room temperature or a temperature between 35°C and 45°C. The exhaust gas exhausted from the hydrogen pole 31 may be at a temperature between 700°C and 750°C. The hydrogen supplied to the hydrogen pole 31 may be heated into a temperature of about 650°C or more, at the first heat exchanger 41.

The steam is supplied to the fuel cell 30 via the steam supply passage L21. The steam generator 10 connected to the steam supply passage L21, may include a pump 11 and a boiler 12. The water which is supplied to the boiler 12 by the pump 11 is heated to generate the steam. Here, the boiler 12 may be performed as the conventional combustion device or incinerator such as a boiler system, a cogeneration system, a combined power generation system, a waste incineration system and so on.

The steam supply passage L21 interflows to the hydrogen supply passage L11, and the mixed gas of the hydrogen and the steam is supplied to the hydrogen pole 31 of the fuel cell 30 via a mixed gas supply passage L12. Here, from a view point of the hydrogen supply passage L11, the conflux between the steam supply passage L21 and the hydrogen supply passage L11 may be disposed between the first heat exchanger 41 and the hydrogen pole 31, at a downstream side of the first heat exchanger 41. Thus, the high temperature exhaust gas exhausted from the hydrogen pole 31 merely heats the hydrogen at the first heat exchanger 41 without re-heating the steam heated with a high temperature, so that the hydrogen may be heated more, compared to the heating of the mixed gas having the hydrogen and the steam,

Alternatively, although not shown in the figure, from a view point of the hydrogen supply passage L11, the conflux between the steam supply passage L21 and the hydrogen supply passage L11 may be disposed at a front side of the first heat exchanger 41.

The reversible water electrolysis system according to the present example embodiment may further include a first heater 61. The first heater 61 is disposed adjacent to an inlet of the hydrogen pole 31 and is disposed at the mixed gas supply passage L12. The first heater 61 heats the mixed gas of the hydrogen and the steam to be a predetermined range of temperature, so as for the fuel cell 30 to be operated with an optimized efficiency at both of the SOEC mode and the SOFC mode.

For example, the first heater 61 may heat the mixed gas of the hydrogen and the steam to be the temperature between 650°C and 750°C. In addition, although not shown in the figure, to control the above heating temperature, at least one temperature sensor may be disposed at an inside, a front side or a rear side of the first heater 61 to measure the temperature of the mixed gas, and the mixed gas may be heated based on the measured temperature.

The reversible water electrolysis system according to the present example embodiment may further include an air supply passage L53 and an air-exhaust gas heat exchanger 53 disposed at the air supply passage L53. An air is supplied from outside to the air pole 32 via the air supply passage L53. The air-exhaust gas heat exchanger 53 exchanges a heat between the air supplied to the air pole 32 via the air supply passage L53 and the exhaust gas exhausted from the air pole 32 and transferred to the exhaust passage L61.

A second heater 62 may be equipped at the air supply passage L53. The second heater 62 is disposed adjacent to the air pole 32 and is disposed at the air supply passage L53. The second heater 62 heats the air into a predetermined range of temperature, so as for the fuel cell 30 to be operated with the optimized efficiency. For example, the heat exchanger 53 may heat the air of room temperature into a temperature between 650°C and 700°C, and then the second heater 62 may heat the heated air into a temperature between 700°C and 750°C. Then, the air may be supplied to the air pole 32.

In the present example embodiment, a first bifurcation passage L51 and a second bifurcation passage L52 which are connected in parallel, are connected to an upstream of the air supply passage L53. A first blower 51 is equipped to the first bifurcation passage L51, and a second blower 52 is equipped to the second bifurcation passage L52.

An amount of air transferred via the second bifurcation passage L52 is larger than that via the first bifurcation passage L51. For example, a diameter of a conduit of the second bifurcation passage L52 may be larger than that of the first bifurcation passage L 51, and thus the second blower 52 supplies the air more than the first blower 51. Here, the amount of the air via the second bifurcation passage L52 may be larger than that via the first bifurcation passage L51, by five to fifteen times.

At the SOEC mode, the water (steam) and the electricity are necessary larger than the air, but at the SOFC mode, the hydrogen and the oxygen (air) are necessary larger than the water and the electricity. Thus, at the SOEC mode, the first blower 51 is only operated and the second blower 52 is not operated. However, at the SOFC mode, the second blower 52 is only operated and the first blower 51 is not operated. Alternatively, at the SOFC mode, both of the first and second blowers 51 and 52 may be operated.

The exhaust gas exhausted at the hydrogen pole 31 of the fuel cell 30 is exhausted to outside via the exhaust passage L41. Here, the first heat exchanger 41 and the second heat exchanger 42 are sequentially equipped along the exhaust passage L41. The exhaust gas transmits thermal energy to the hydrogen supplied to the hydrogen pole 31 via the hydrogen supply passage L11, to heat the hydrogen, at the first heat exchanger 41.

The exhaust gas transferring via the exhaust passage L41 is transferred to a water discharger. The water discharger separates the water from the exhaust gas. In the present example embodiment, the water discharger may include a pump, a cooling device and so on which is equipped to a circulation passage L70 of a refrigerant passing through and circulating a condenser 71 and a drain 72.

The water of the exhaust gas is condensed at the condenser 72, and the condensed water is discharged to outside via the water discharge passage L42 and L43 at the drain 72. The remaining gas (hydrogen and steam) not condensed to the water is transferred via the passage L45, and is separated into the hydrogen and the steam via a blower 73, a compressor 74 and a hydrogen separator 75, and then each of the hydrogen and the steam is individually treated.

The water discharger illustrated in the figure is an example, and thus the method for separating and discharging the water from the exhaust gas, the method for extracting the hydrogen, and the devices for performing the methods may be variously changed.

In the present example embodiment, the gas passing through the drain 72 and transferring via the passage L45 is at least partially bifurcated by the recycling passage L44. The recycling passage L44 is connected to the hydrogen supply passage L11, and thus the gas bifurcated via the recycling passage L44 may be resupplied to the hydrogen pole 31 as a recycling gas.

For example, at the SOFC mode, the gas in the passage L45 may be at least partially recycled to the recycling passage L44 to be supplied to the hydrogen pole 31, and at the SOEC mode, the recycling passage L44 may be closed. For performing the above, a 3-way valve may be equipped at a bifurcation point of the recycling passage L44, or an on-off valve may be equipped at an arbitrary position of the recycling passage L44.

In the present example embodiment, the second heat exchanger 42 and a blower 45 may be equipped at the recycling passage L44. Here, the second heat exchanger 42 and the blower 45 are sequentially equipped at the recycling passage L44 from an upstream toward a downstream of the recycling passage L44.

The second heat exchanger 42 exchanges a heat between the exhaust gas of the exhaust passage L41 and the recycling gas of the recycling passage L44, to heat the recycling gas. In the present example embodiment, the second heat exchanger 42 may be a mini heat exchanger for increasing the temperature of the recycling gas to prevent the recycling gas from being condensed. The recycling gas bifurcated into the recycling passage L44 is saturated, and thus the devices like the blower 45 may be damaged if even a little recycling gas is condensed due to the circumstances of the recycling passage L44. In addition, the durability of the devices like the blower 45 may be decreased if the recycling gas is heated too much at the second heat exchanger 42.

Thus, in the present example embodiment, the mini second heat exchanger 42 is equipped at a front (upstream) of the blower 45, to increase the temperature of the recycling gas slightly and to be transferred to the blower 45. The increased temperature of the recycling gas increased by the second heat exchanger 42 may depend on the amount of the recycling gas. For example, the temperature of the recycling gas may be increased within a range between about 5°C and 30°C.

The recycling gas sequentially passing through the second heat exchanger 42 and the blower 45 interflows at the hydrogen supply passage L11, and is heated to be a relatively high temperature with the hydrogen at the first heat exchanger 41, and then is supplied to the hydrogen pole 31 of the fuel cell 30.

In the present example embodiment, the reversible water electrolysis system may further include a drain pump 77 equipped at the water discharge passage L43. The drain pump 77 forces to pump the water discharged via the passage L42 at the drain 72, to discharge the water to outside.

As the drain pump 77 is equipped to the water discharge passage L43, the pressure difference between the inlet of the hydrogen pole 31 and the inlet of the air pole 32 is removed or decreased within a predetermined range.

As the pressure difference between the inlet of the hydrogen pole 31 and the inlet of the air pole 32 is decreased, the fuel cell system may be operated more stably and more efficiently. However, in the conventional fuel cell system, many passages or heat exchanges are equipped at the inlet and the outlet of the hydrogen pole 31 compared to the air pole 32, and thus the pressure of the hydrogen pole 31 is more increased. In contrast, in the present example embodiment, as the drain pump 77 is operated, the absorbing force of the pump 77 is applied to the hydrogen pole 31 via the exhaust passage L41 of the hydrogen pole 31, and thus the pressure at the inlet of the hydrogen pole 31 may be decreased.

Thus, to control the operation of the pump 77, the pressure of the inlet of the hydrogen pole 31 is maintained to be substantially same as or be in a predetermined range with that of the inlet of the air pole 32, so that the system may be stably and efficiently operated.

In addition, as the pressure of the inlet of the hydrogen pole 31 is decreased, the capacity of the pump or the blower for transferring the hydrogen to the hydrogen pole 31 via the hydrogen supply passage L11 may be decreased. In addition, even though the pressure inside of the exhaust passage L41 is decreased to be lower than an atmospheric pressure, the water is prevented from flowing back to the exhaust passage L41 since the pump 77 forces to discharge the water.

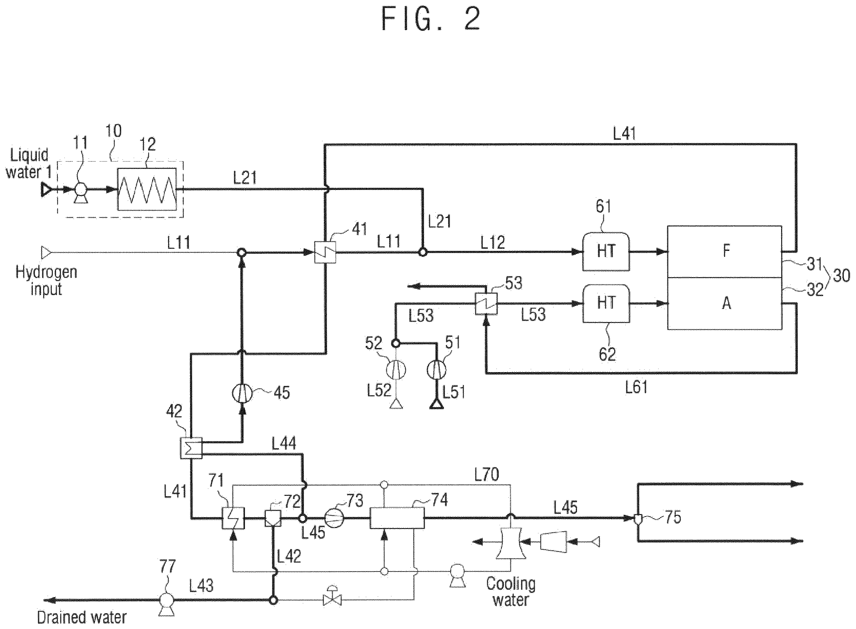

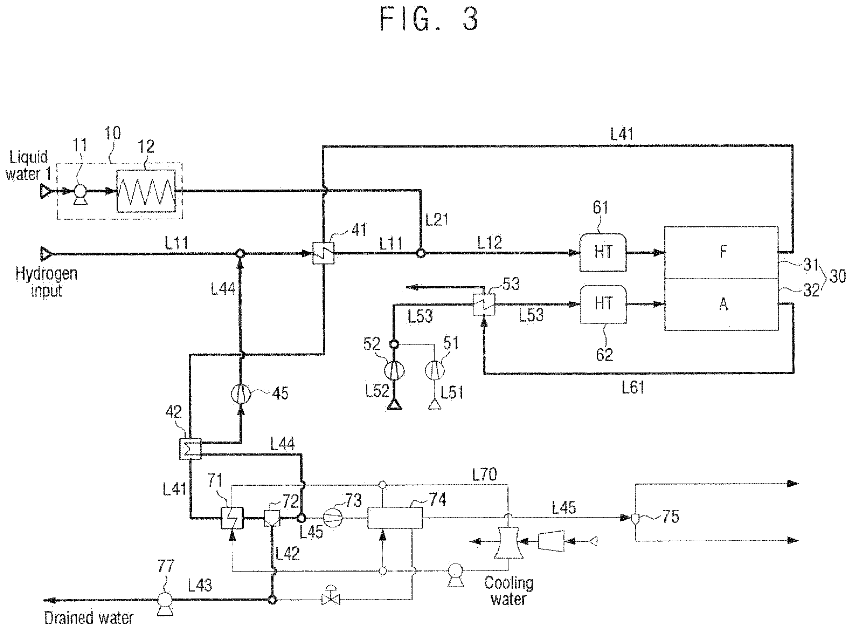

Hereinafter, referring to FIG. 2 and FIG. 3, the SOEC mode and the SEFC mode of the reversible water electrolysis system according to the first example embodiment are explained.

FIG. 2 is a schematic diagram illustrating a SOEC mode of the reversible water electrolysis system of FIG. 1. In FIG. 2, the passages used at the SOEC mode are illustrated as a bold line.

Referring to FIG. 2, at the SOEC mode, the steam is supplied to the hydrogen pole 31 of the fuel cell 30 via the steam supply passage L21 and the passage L21. At the SOEC mode, a relatively small amount of hydrogen is necessary, and thus additional hydrogen is not supplied via the hydrogen supply passage L11, but at the initial time, the hydrogen may be supplied a little.

In addition, a small amount of air is necessary at the SOEC mode, and thus the first blower 51 is operated to supply the air to the air pole 32 of the fuel cell 30 and the second blower 52 is not operated.

As the water electrolysis reaction occurs at the fuel cell 30, the first exhaust gas including the hydrogen and the steam is exhausted from the hydrogen pole 31 to the exhaust passage L41, and the second exhaust gas including the oxygen and the air is exhausted from the air pole 32 to the exhaust passage L61.

The first exhaust gas exhausted to the exhaust passage L41 exchanges a heat with the recycling gas at the first and second heat exchangers 41 and 42, so that the recycling gas is heated. Here, the recycling gas is resupplied to the hydrogen pole 31 via the recycling passage L44. Then, the first exhaust gas is transferred to the water discharger, the steam is condensed to be discharged to outside via the water discharge passage L43, and the mixed gas having the hydrogen and the uncondensed steam is partially resupplied to the hydrogen pole 31 via the recycling passage L44 as the recycling gas. Here, the remaining of the mixed gas not supplied to the hydrogen pole 31 is transferred via the exhaust passage L45, to be independently separated and stored.

Here, a ratio of the amount of the mixed gas bifurcated into each of the recycling passage L44 and the exhaust passage L45 may be variously changed, and for example, the ratio may be 1:3 to 1:5. That is, the ratio of the amount of the mixed gas flowed to the recycling passage L44 and that flowed to the exhaust passage L45 may be 1:3 to 1:5.

FIG. 3 is a schematic diagram illustrating a SOFC mode of the reversible water electrolysis system of FIG. 1. In FIG. 3, the passages used at the SOFC mode are illustrated as a bold line.

Referring to FIG. 3, at the SOFC mode, the hydrogen is supplied via the hydrogen supply passage L11 and a little amount of steam is supplied via the steam supply passage L21. Alternatively, no steam is required in the steam supply passage L21. The hydrogen is heat-exchanged with the exhaust gas of the exhaust passage L41 at the first heat exchanger 41, and the hydrogen is heated and mixed with the steam. Then, the mixed gas of the steam and the hydrogen is supplied to the hydrogen pole 31 via the mixed passage L12.

At the SOFC mode, a large amount of air is necessary, and thus the second blower 52 is operated to supply the air to the air pole 32 and the first blower 51 is not operated. Alternatively, both of the first and second blowers 51 and 52 may be operated.

As the chemical reaction between the hydrogen and the oxygen occurs at the fuel cell 30, the first exhaust gas including the steam and the hydrogen is exhausted via the exhaust passage L41 from the hydrogen pole 31, and the second exhaust gas including the nitrogen and the oxygen is exhausted via the exhaust passage L61 from the air pole 32.

The first exhaust gas exhausting to the exhaust passage L41 exchanges a heat with the recycling gas at the first and second heat exchangers 41 and 42, so that the recycling gas is heated. Here, the recycling gas is resupplied to the hydrogen pole 31 via the recycling passage L44. Then, the first exhaust gas is transferred to the water discharger, the steam is condensed to be discharged to outside via the water discharge passage L43, and the mixed gas including the hydrogen and the uncondensed steam is resupplied to the hydrogen pole 31 via the recycling passage L44 as the recycling gas.

According to the first example embodiment referring to FIGS. 1 to 3, the properly mixed gas of hydrogen and steam is supplied to the fuel cell 30 according to each operating mode of the reversible water electrolysis system.

For example, at the SOEC mode, a relatively small amount of hydrogen is necessary, and thus the exhaust gas exhausted to the exhaust passage L41 is partially bifurcated into the recycling passage L44, and the hydrogen included in the recycling gas feedback through the recycling passage L44 is used. Thus, the hydrogen is unnecessary to be additionally supplied from outside to the hydrogen supply passage L11, and the air is merely supplied by only operating the first blower 51 which is relatively mini size since a relatively small amount of air is also necessary.

In contrast, at the SOFC mode, the remaining exhaust gas except for the condensed water of the exhaust gas exhausted to the exhaust passage L41 is resupplied via the recycling passage L44 as the recycling gas, so that the hydrogen not reacted and wasted at the fuel cell 30 may be minimized.

In addition, the operation of the pump 77 is controlled at each of the SOEC mode and the SOFC mode, to maintain the pressure of the inlet of the hydrogen pole 31 and the pressure of the inlet of the air pole 32 to be substantially same with each other or to be in a predetermined range, so that the system may be operated more stably and more efficiently. In addition, the second heat exchanger 42 is equipped at the upstream side of the blower 45 of the recycling passage L44, and thus the blower 45 may be prevented from being damaged due to the condense of the steam inside of the recycling passage L44.

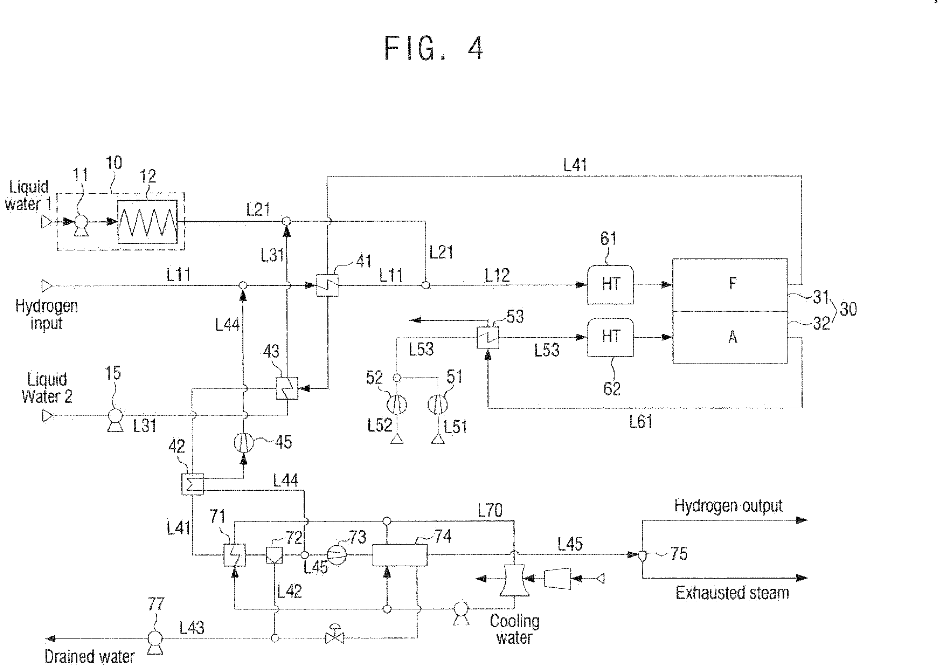

FIG. 4 is a schematic diagram illustrating a reversible water electrolysis system according to a second example embodiment of the present invention.

The reversible water electrolysis system according to the present example embodiment is substantially same as the reversible water electrolysis system in FIG. 1 except that a water supply passage L31, a pump 15 equipped at the passage L31 and a third heat exchanger are further included, and thus same references are used for the same elements and any repetitive explanation will be omitted. Here, the water supply passage L31 supplies a water from outside (hereinafter, an outer supply water).

Referring to FIG. 4, in the reversible water electrolysis system according to the present example embodiment, the third heat exchanger 43 exchanges a heat between the outer supply water supplied to the passage L31 and the exhaust gas exhausted from the hydrogen pole 31, and the second heat exchanger 42 may be disposed at a downstream of the first heat exchanger 41 from a view point of a flow of the exhaust gas.

For example, the outer supply water may be at a temperature between a room temperature and 45°C. The exhaust gas supplied to the third heat exchanger 43 may be at a temperature between 600°C and 700°C. The outer supply water may be evaporated and heated into a temperature of about 600°C or more, at the third heat exchanger 43. The steam evaporated at the third heat exchanger 43 interflows to the steam supply passage L21, and then is supplied to the hydrogen pole 31 via the passages L21 and L12.

Accordingly, the water supply passage L31 receiving the water from outside and the third heat exchanger 43 are further included, and thus a waste heat recovery rate for the exhaust gas exhausted from the hydrogen pole may be more increased. In the previous first example embodiment, the exhaust gas at the exhaust passage L41 is maintained with a relatively high temperature after the exhaust gas passes through the first heat exchanger 41 and the second heat exchanger 42 mentioned below. Here, for example, at the SOEC mode, the exhaust gas passing through the second heat exchanger 42 may be at the temperature of 600°C or more. However, in the present example embodiment, the exhaust gas of the exhaust passage L41 heats the outer supply water at the third heat exchanger 43, so that the exhaust gas passing through the second heat exchanger 42 may be cooled down to the temperature between 100°C and 150°C. Thus, the waste heat recovery rate for the exhaust gas may be more increased.

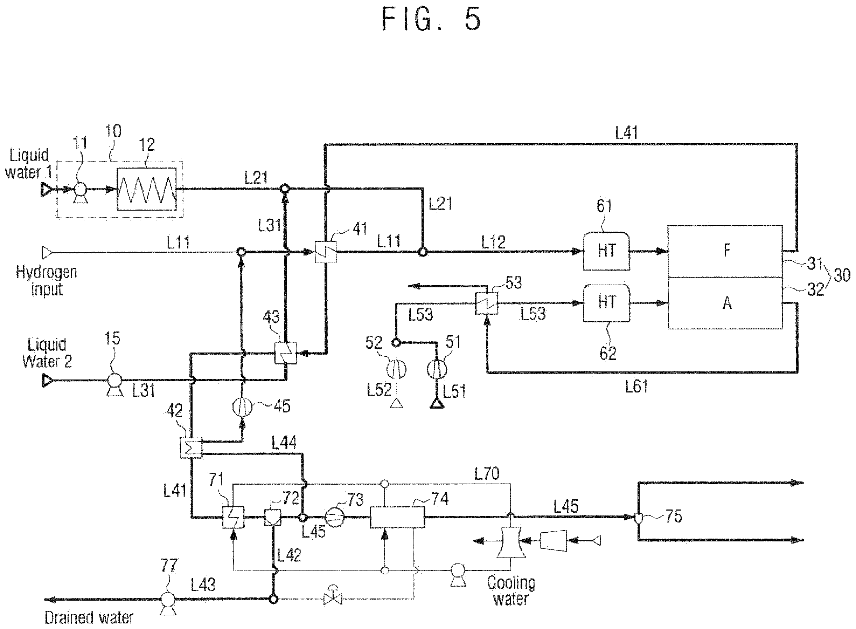

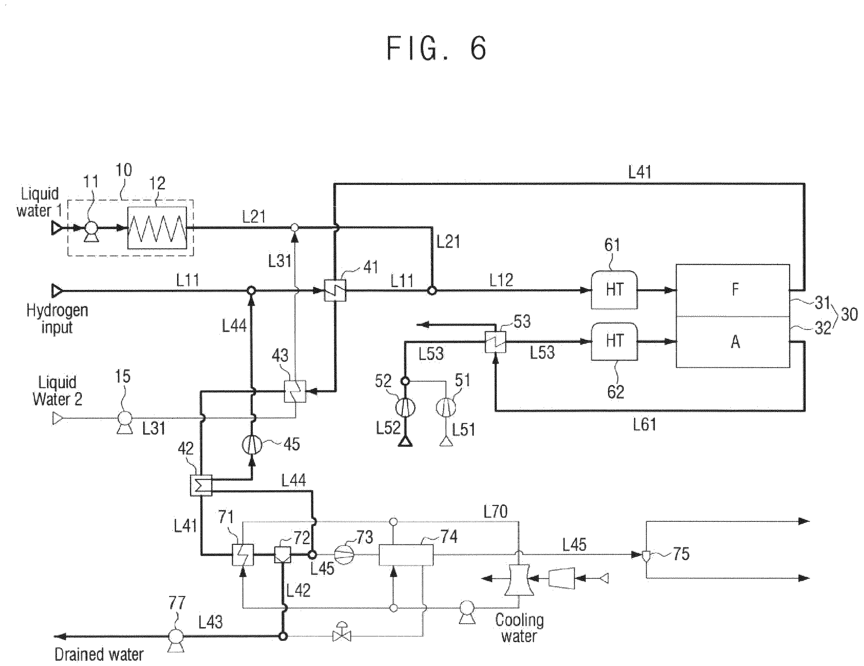

Hereinafter, referring to FIG. 5 and FIG. 6, the operation at each of the SOEC mode and the SOFC mode is explained in detail, for the reversible water electrolysis system according to the present example embodiment.

FIG. 5 is a schematic diagram illustrating a SOEC mode of the reversible water electrolysis system of FIG. 4. In FIG. 5, the passages used at the SOEC mode are illustrated as a bold line.

The reversible water electrolysis system according to the present example embodiment is substantially same as the reversible water electrolysis system in FIG. 1 except that the outer supply water is additionally supplied via the water supply passage L31.

Referring to FIG. 5, at the SOEC mode, the steam generated at the steam generator 10 is supplied via the steam supply passage L21, and at the same time, the outer supply water is supplied via the outer supply passage. The outer supply passage is evaporated at the third heat exchanger 43 to be a steam having a relatively high temperature, and then the high temperature steam interflows to the steam supply passage L21. The mixed steam is supplied to the hydrogen pole 31 via the passages L21 and L12.

At the SOEC mode, a relatively small amount of hydrogen is necessary, and thus the additional hydrogen is not supplied via the hydrogen supply passage L11. In addition, a relatively small amount of air is necessary, and thus the first blower 51 is operated but the second blower 52 is not operated.

As the water electrolysis reaction occurs at the fuel cell 30, the first exhaust gas including the hydrogen and the steam is exhausted from the hydrogen pole 31 via the exhaust passage L41, and the second exhaust gas including the oxygen and the air is exhausted from the air pole 32 via the exhaust passage L61.

The first exhaust gas exhausted to the exhaust passage L41 sequentially heats the downstream recycling gas, the outer supply water and the upstream recycling gas, with sequentially passing through the first heat exchanger 41, the third heat exchanger 43 and the second heat exchanger 42, and then the first exhaust gas is transferred to the water discharger. At the water discharger, the steam of the first exhaust gas is condensed to be discharged to outside via the water discharge passage L43, and the mixed gas of the hydrogen and the uncondensed steam is partially resupplied to the hydrogen pole 31 via the recycling passage L44 as the recycling gas, and then the remaining gas of the mixed gas is transferred via the exhaust passage L45 to be independently separated and treated.

A ratio of the amount of the mixed gas bifurcated into each of the recycling passage L44 and the exhaust passage L45 may be variously changed, and for example, the ratio may be 1:3 to 1:5. That is, the ratio of the amount of the mixed gas flowed to the recycling passage L44 and that flowed to the exhaust passage L45 may be 1:3 to 1:5.

FIG. 6 is a schematic diagram illustrating a SOFC mode of the reversible water electrolysis system of FIG. 4. In FIG. 6, the passages used at the SOFC mode are illustrated as a bold line.

The operation at the SOFC mode is substantially same as the operation of the SOFC at the previous first example embodiment referring to FIG. 3.

Referring to FIG. 6, at the SOFC mode, the hydrogen is supplied via the hydrogen supply passage L11, and a relatively small amount of steam is supplied via the steam supply passage L21. Since the small amount of steam is necessary, the outer supply water is not supplied via the water supply passage L31.

The hydrogen is heated via the heat-exchange with the exhaust gas of the exhaust passage L41 at the first heat exchanger 41, and then the heated hydrogen is mixed with the steam. Then, the mixed gas having the steam and the hydrogen is supplied to the hydrogen pole 31.

At the SOFC mode, a relatively large amount of air is necessary, and thus the second blower 52 for supplying the air to the air pole 32 is operated but the first blower 51 is not operated. Alternatively, both of the first and second blowers 51 and 52 may be operated.

The first exhaust gas exhausted from the hydrogen pole 31 exchanges a heat with the recycling gas at the first and second heat exchangers 41 and 42, so that the recycling gas is heated. Then, the first exhaust gas is transferred to the water discharger, the steam is condensed to be discharged to outside via the water discharge passage L43, and the mixed gas including the hydrogen and the uncondensed steam is resupplied to the hydrogen pole 31 via the recycling passage L44 as the recycling gas.

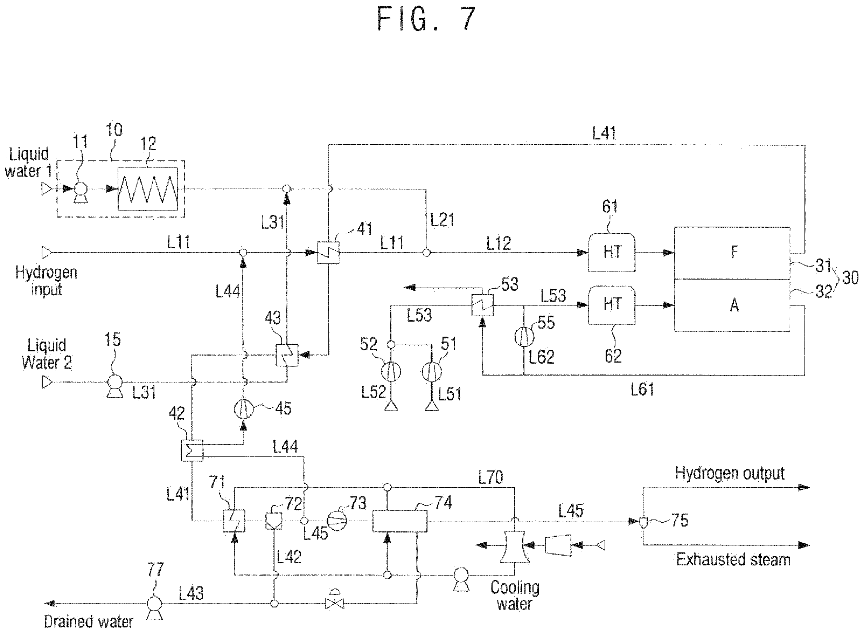

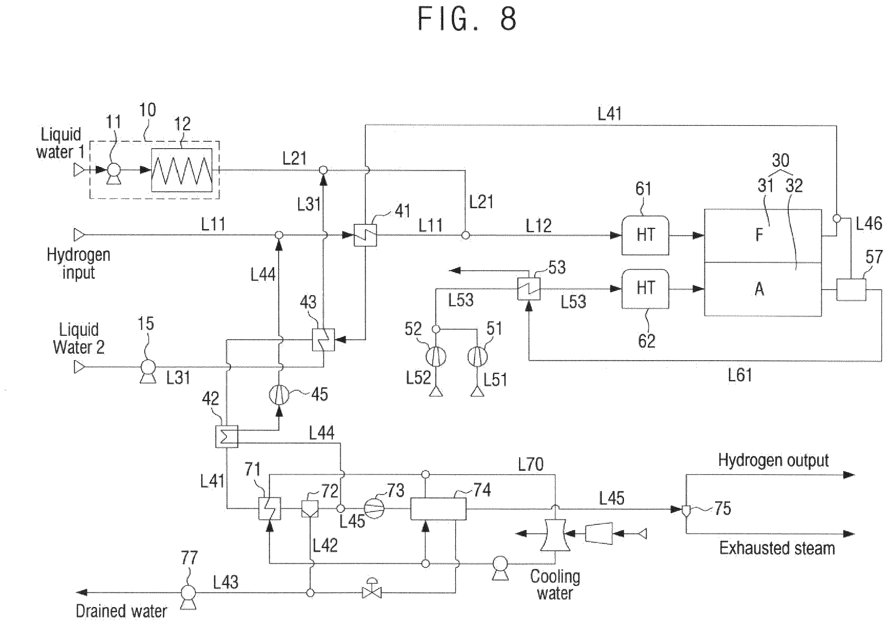

Hereinafter, referring to FIG. 7 and FIG. 8, the reversible water electrolysis systems according to third and fourth present example embodiments of the present invention are explained in detail.

FIG. 7 is a schematic diagram illustrating a reversible water electrolysis system according to a third example embodiment of the present invention.

The reversible water electrolysis system according to the present example embodiment is substantially same as the reversible water electrolysis system in FIG. 4 except that a feedback passage L62 and a blower equipped at the feedback passage 55 are further included. Here, the feedback passage L62 connects the air supply passage L53 with the air exhaust passage L61.

Referring to FIG. 7, in the present example embodiment, the feedback passage L62 connects an upstream side of the heat exchanger 53 of the air exhaust passage L61 with a downstream side of the heat exchanger 53 of the supply passage L53.

Accordingly, the exhaust gas exhausting along the exhaust passage L61 from the air pole 32 is partially recycled to the blower 55. For example, a half of the exhaust gas in the exhaust passage L61 may be bifurcated to the feedback passage L62, but not limited thereto and an amount of the bifurcated exhaust gas may be variously changed. The recycled exhaust gas passing through the blower 55 is mixed with the air flowed via the air supply passage L51 and/or L52, and then is supplied to the air pole 32.

Conventionally, the air flowed via the air supply passage L51 and/or L52 is heated at the air-exhaust heat exchanger 53, but the air is additionally heated at the second heater 62 because of an insufficient heating energy. However, as the amount of the supplied air increases (for example, as for the SOFC mode), the power consumption at the second heater 62 is also increased, so that the system efficiency may be entirely decreased.

Thus, in the present example embodiment, the high temperature exhaust gas exhausted from the air pole 32 is mixed with the air via the feedback passage L62, and thus relatively high temperature air may be supplied to the air pole 32 and the second heater 62 may not be operated. Thus, the power consumption may be also decreased. For example, as the experimental results at the SOFC mode, the power consumption of the blower 55 according to the present example embodiment was decreased by 1/5, compared to the second heater 62 at the first example embodiment or the second example embodiment.

In addition, the air supplied to the air pole 32 is partially filled with the recycling gas in the feedback passage L62, so that, at the SOFC mode, the amount of the air supplied to the bifurcation passage L52 is decreased, and the amount of the air treated in the second blower 52 is also decreased. Thus, the air-exhaust gas heat exchanger 53 may be minimized and the power consumption at system auxiliary equipment (a balance of plant, BOP) adjacent to the air pole 32 may be decreased, to enhance the energy efficiency of the entire system.

FIG. 8 is a schematic diagram illustrating a reversible water electrolysis system according to a fourth example embodiment of the present invention.

The reversible water electrolysis system according to the present example embodiment is substantially same as the reversible water electrolysis system in FIG. 4 except that a bifurcation passage L46 and a catalytic combustor 57 are further included. Here, the bifurcation passage L46 connects the exhaust passage L41 of the hydrogen pole L41 with the exhaust passage L61 of the air pole, and the catalytic combustor 57 is equipped at the conflux between the bifurcation passage L46 and the exhaust passage L61 of the air pole.

Referring to FIG. 8, the catalytic combustor 57 induces the exhaust gas exhausted from the air pole 32 and the exhaust gas of the hydrogen pole bifurcated via the bifurcation passage L46, to pass through a carrier carrying a metal or a metal oxide catalyst.

At the SOFC mode, a small amount of hydrogen of the exhaust gas exhausted from the hydrogen pole 31 is functioned as a fuel at the catalytic combustor 57, to heat the air exhausted from the air pole 32, and thus the temperature of the exhaust gas of the air pole 32 is increased by about 20°C to 30°C.

For example, without the catalytic combustor 57 as in the first to third example embodiments, the temperature of the exhaust gas exhausted from the air pole 32 may be about 750°C, but with the catalytic combustor 57 as in the present example embodiment, the temperature of the exhaust gas passing through the catalytic combustor 57 may be heated to a temperature between 770°C and 780°C. Accordingly, the exhaust gas is additionally heated and thus more increased thermal energy may be provided to the air of the air passage L53 at the air-exhaust gas heat exchanger 53, so that the second heater 62 may not be operated. The specific temperatures mentioned at the above explanation may be examples, and the specific temperature or the specific range of the temperature may be variously changed.

Here, at the SOFC mode at which the air is required, the catalytic combustor 57 is used, but at the SOEC mode, the catalytic combustor 57 may not be used. Thus, an on-off valve (not shown) may be equipped to the bifurcation passage L46, and the valve may be open at the SOFC mode and closed at the SOEC mode. Alternatively, to avoid using a relatively high temperature valve, the on-off valve may be equipped to the recycling passage L44 after the blower 45, instead of being equipped to the bifurcation passage L46.

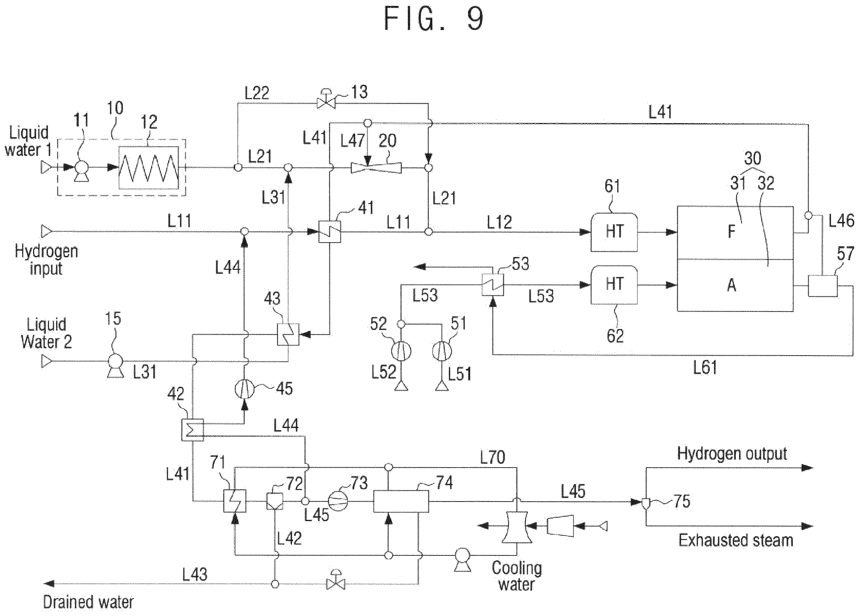

FIG. 9 is a schematic diagram illustrating a reversible water electrolysis system according to a fifth example embodiment of the present invention.

The reversible water electrolysis system according to the present example embodiment is substantially same as the reversible water electrolysis system in FIG. 1 except that an ejector 20 equipped at a steam supply passage L21 and a bifurcation passage L22 bifurcated from the steam supply passage are further included, and the pump 77 in FIG. 1 is omitted in the water discharge passage L43, and thus same references are used for the same elements and any repetitive explanation will be omitted.

Referring to FIG. 9, in the reversible water electrolysis system according to the present example embodiment, the steam supply passage L21 includes the bifurcation passage L22. As illustrated in FIG. 9, the bifurcation passage L22 is bifurcated from the steam supply passage L21 and interflows to the passage L21 again. An on-off valve 13 may be equipped at the bifurcation passage L22, and although not shown in the figure, the on-off valve may be also equipped to the steam supply passage L21. The steam may be controlled to be flowed into one of the steam supply passage L21 and the bifurcation passage L22, by controlling the on-off valve. Alternatively, a 3-way valve may be equipped at a bifurcation point at which the bifurcation passage L22 is formed, to control the flow of the steam.

The ejector 20 is equipped at the steam supply passage L21, and is arranged in parallel with the bifurcation passage L22. Here, the steam from the steam generator 10 may be transferred to the hydrogen pole 31 via the ejector 20, or may be transferred to the hydrogen pole 31 via the bifurcation passage L22 with bypassing the ejector 20.

The ejector 20 mixes a fluid using Venturi effect, and the fluid to be mixed is injected to a venturi tube having a diameter gradually decreased and expanded.

Normally, an inlet of the ejector 20 is called as a motive nozzle, an outlet of the ejector 20 is called as a diffuser nozzle, and an injecting port through which the fluid is injected is called as a suction port. In the present example embodiment as illustrated in the figure, the motive nozzle of the ejector 20 is connected to an upstream side of the steam supply passage L21, the diffuser nozzle of the ejector 20 is connected to a downstream side of the steam supply passage L21, and the suction port of the ejector 20 is connected to a feedback passage L47. The feedback passage L47 is bifurcated from the exhaust passage L41 at which the exhaust gas of the hydrogen pole 31 flows.

Normally, at the SOEC mode, a volume ratio between the steam and the hydrogen injected to the hydrogen pole 31 is about 9:1. In the exhaust gas exhausted from the hydrogen pole 31, the amount of the hydrogen is relatively large, and thus the hydrogen is unnecessary to be additionally supplied via the hydrogen supply passage L11 if the recycling gas is partially recycled via the feedback passage L47. Here, the ejector 20 controls the pressure or the amount of the steam supplied to the motive nozzle (transferred via the passage L21), to control the amount of the exhaust gas recycled to the feedback passage L47.

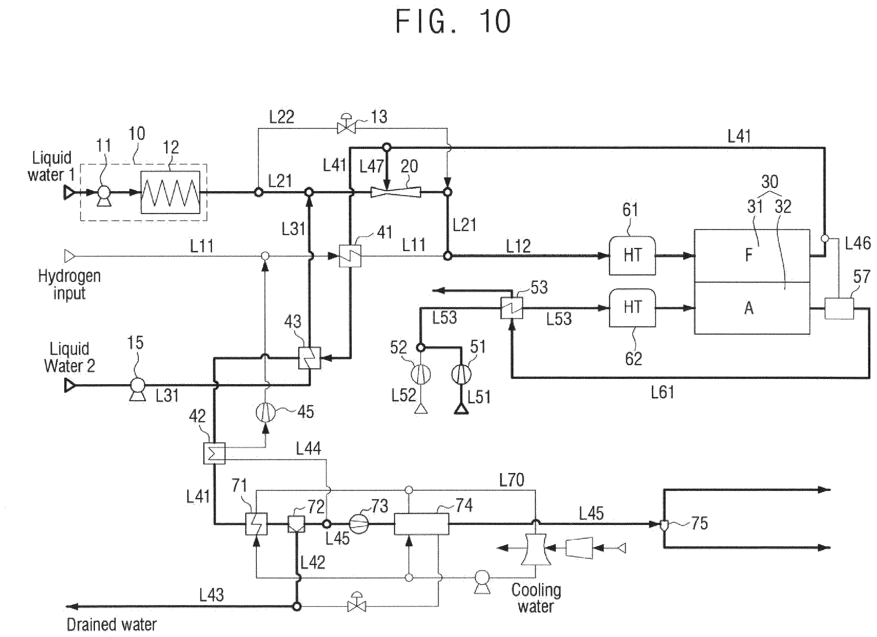

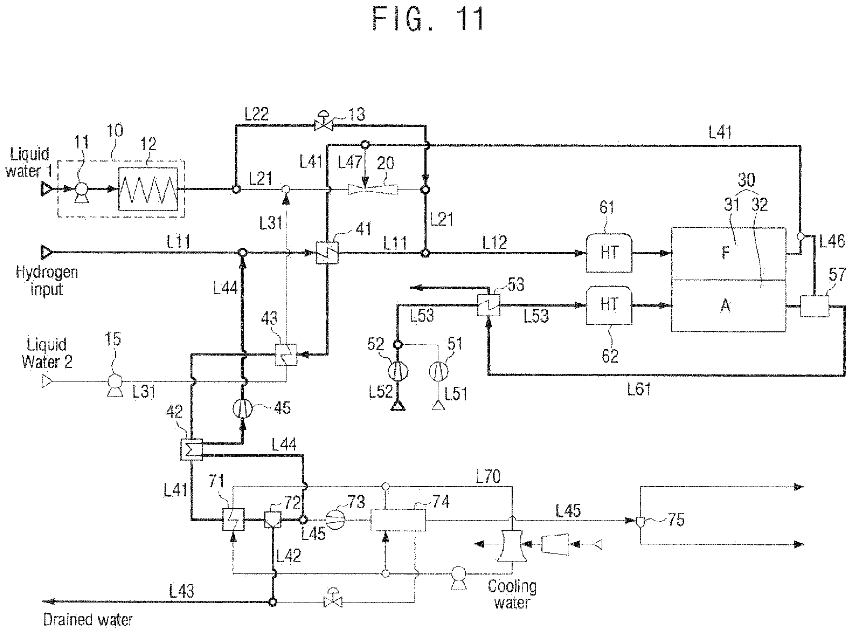

Hereinafter, referring to FIG. 10 and FIG. 11, the SOEC mode and the SOFC mode of the reversible water electrolysis system according to the fifth example embodiment are explained.

FIG. 10 is a schematic diagram illustrating a SOEC mode of the reversible water electrolysis system of FIG. 9. In FIG. 10, the passages used at the SOEC mode are illustrated as a bold line.

Referring to FIG. 10, at the SOEC mode, the steam is supplied via the steam supply passage L21. The outer supply water is supplied via the water supply passage L31 and the outer supply water is evaporated at the second heat exchanger 4, and then the evaporated water interflows to the steam supply passage L21. The mixed steam passes through the ejector 20, and here, the exhaust gas exhausting via the exhaust passage L41 is partially flowed into the ejector 20 via the feedback passage L47 to be mixed with the steam. The above mixed gas is supplied to the hydrogen pole 31 of the fuel cell 30 via the passage L12.

At the SOEC mode, relatively a small amount of air is necessary, and thus the first blower 51 is operated to supply the air to the air pole 32 of the fuel cell 30 and the second blower 52 is not operated.

As the water electrolysis reaction occurs at the fuel cell 30, the first exhaust gas including the hydrogen and the steam is exhausted from the hydrogen pole 31 via the exhaust passage L41, and the second exhaust gas including the oxygen and the air is exhausted from the air pole 32 via the exhaust passage L61.

At the SOEC mode, the catalytic combustor 57 may not be used, and the first exhaust gas exhausting to the exhaust passage L41 is partially bifurcated at the feedback passage L47 and then is supplied to the suction port of the ejector 20. The remaining exhaust gas passes through the first heat exchanger 41 without the heat exchanging, and transmits the thermal energy at the outer supply water at the second heat exchanger 42.

In the present example embodiment, at the SOEC mode, the recycling passage L44 is closed, and thus the exhaust gas of the exhaust passage L41 passes through the third heat exchange 43 without the heat exchanging and then is transferred to the water discharger. At the water discharger, the steam is condensed to be discharged to outside via the water discharge passage L43, and the hydrogen and the steam which is not condensed are transferred via the passage L45. Then, the hydrogen and the uncondensed steam are separately treated.

FIG. 11 is a schematic diagram illustrating a SOFC mode of the reversible water electrolysis system of FIG. 9. In FIG. 11, the passages used at the SOFC mode are illustrated as a bold line.

Referring to FIG. 11, at the SOFC mode, the hydrogen is supplied via the hydrogen supply passage L11, and a small amount of steam is supplied via the steam supply passage L21. The hydrogen is heat-exchanged with the exhaust gas of the exhaust passage L41 at the first heat exchanger 41 to be heated and then is supplied to the hydrogen pole 31. The steam is transferred via the bifurcation passage L22 by bypassing the ejector 20, interflows to the hydrogen, and then is supplied to the hydrogen pole 31.

At the SOFC mode, relatively large amount of air is necessary, so that the second blower 52 is operated to supply the air to the air pole 32 and the first blower 51 is not operated. Alternatively, both of the first and second blowers 51 and 52 may be operated.

In the present example embodiment, at the SOFC mode, the catalytic combustor 57 is operated. The exhaust gas exhausted from the hydrogen pole 31 is partially supplied to the catalytic combustor 57 via the bifurcation passage L45 to be a fuel of the catalytic combustor 57, and the air exhausted from the air pole 32 is heated. The catalytic combustor 57 may increase the temperature of the exhaust gas of the air pole 32 by about 20°C to 30°C. Thus, the additionally heated exhaust gas may transmit the thermal energy to the air of the air passage L53 more at the air-exhaust gas heat exchanger 53, so that the second heater 62 may not to be operated.

As the chemical reaction between the hydrogen and the oxygen occurs at the fuel cell 30, the first exhaust gas including the steam and the hydrogen is exhausted from the hydrogen pole 31 via the exhaust passage L41, and the second exhaust gas including the nitrogen and the oxygen is exhausted from the air pole 32 via the exhaust passage L61.

The first exhaust gas heats the hydrogen with passing through the first heat exchanger 41. At the SOEC mode, since the outer supply water is not supplied, the first exhaust gas passes through the third heat exchanger 43 without the heat exchanging, and the first exhaust gas is heat-exchanged with the recycling gas at the second heat exchanger 42 to heat the recycling gas. Then, the first exhaust gas is transferred to the water discharger, and the steam is condensed to be discharged via the water discharge passage L43. Here, the hydrogen and the uncondensed steam are resupplied to the hydrogen pole 31 via the recycling passage L44 as the recycling gas.

Accordingly, in the present example embodiment, the mixed gas of the hydrogen and the steam is properly supplied to the fuel cell 30 according to each of the SOEC mode and the SOFC mode.

For example, at the SOEC mode, relatively a small amount of hydrogen is necessary, and thus the hydrogen included in the exhaust gas fed-back via the feedback passage L47 is used. Thus, the hydrogen is unnecessary to be supplied from outside via the hydrogen supply passage L11. In addition, relatively a small amount of air is also necessary, and thus the first blower 51 which is a relatively small size is only operated to supply the air.

In contrast, at the SOFC mode, the exhaust gas is resupplied via the recycling passage L44 not via the feedback passage L47, so that the hydrogen which is not reacted at the fuel cell 30 and is wasted is minimized. In addition, the steam is supplied by bypassing the ejector 20, so that the ejector 20 is prevented from being interfered, and the second heat exchanger 42 is equipped at the upstream side of the blower 45 of the recycling passage L44 to prevent the blower 45 from being damage.

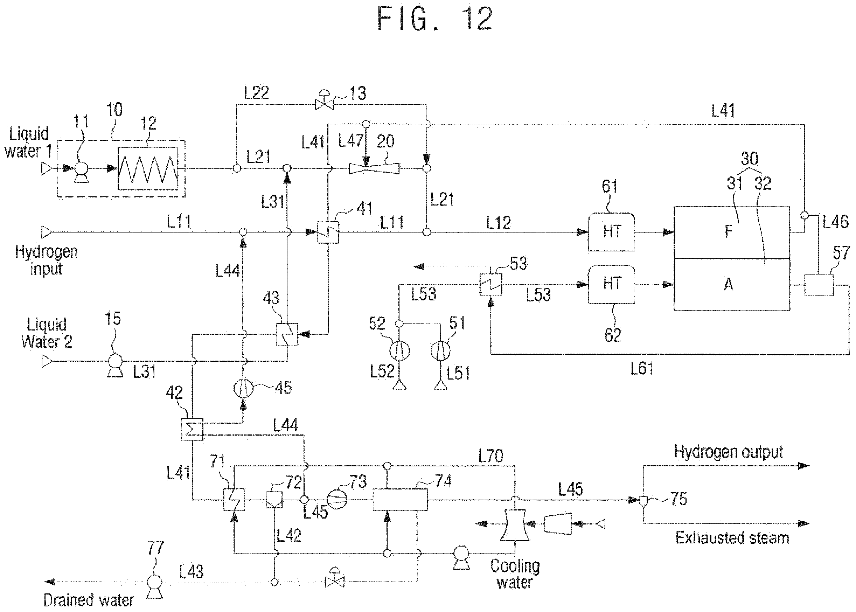

FIG. 12 is a schematic diagram illustrating a reversible water electrolysis system according to a sixth example embodiment of the present invention.

The reversible water electrolysis system according to the present example embodiment is substantially same as the reversible water electrolysis systems according to the previous fourth and fifth example embodiments except that the ejector 20 and the drain pump 77 are included.

Likewise the reversible water electrolysis system according to the previous fifth example embodiment, the ejector 20 is equipped at the steam supply passage L21, and the bifurcation passage L22 bypassing the ejector 20 is connected to the ejector 20 in parallel.

In addition, likewise the reversible water electrolysis system according to the previous fourth example embodiment, the drain pump 77 is equipped at the water discharge passage L43, and forces to pump the water discharged via the passage L42 at the drain 72 so as to discharge the water to outside.

Here, the effects of the ejector 20 and the drain pump 77 are explained above in detail, and thus any repetitive explanation will be omitted.

Accordingly, in the reversible water electrolysis system according to the present example embodiment, the mixed gas including the hydrogen and the steam is properly supplied to the fuel cell according to each of the SOEC mode and the SOFC mode, and the waste heat of the exhaust gas exhausted from the fuel cell is also properly reused. Thus, the efficiency of the system may be increased.

Generally, at the SOEC mode of the reversible water electrolysis system, the system efficiency may be defined as below equations.

$$\eta_1 = \frac{mLHV_{H2}}{E_{waste} + E_{elec}}$$

$$\eta_2 = \frac{mLHV_{H2}}{E_{elec}}$$

$$\eta_3 = \frac{E_{exH2\_Out} - E_{exH2in}}{E_{exWaste} + E_{elec}}$$

In the above equations, $\eta 1$ is an efficiency defined as a rate between an output energy and an input energy. The input energy which is a denominator means a calorie of a waste supplied to the boiler 12 and an electric energy supplied to the fuel cell 30 by a renewable energy. The output energy which is a numerator means a calorie of the hydrogen generated at the fuel cell 30, in other words, an amount of the generated hydrogen at the fuel cell 30. $\eta 2$ means the elimination of the calorie of the waste at the denominator of $\eta 1$. $\eta 3$ means an efficiency of exergy, which is the efficiency reflecting both of quantity and quality of the energy.

Likewise, at the SOFC mode of the reversible water electrolysis system, the system efficiency may be defined as below equations.

$$\eta_1 = \frac{E_{elec\_out}}{E_{Waste} + mLHV_{H2}}$$

$$\eta_2 = \frac{E_{elec\_out}}{mLHV_{H2}}$$

$$\eta_3 = \frac{E_{elec}}{E_{exWaste} + E_{exH2\_in} - E_{exH2\_out}}$$

According to the above equations, the efficiency of exergy $\eta3$ was calculated for each of the first to fourth example embodiments of the present invention at the SOEC mode. Thus, the efficiency of exergy $\eta3$ is 79.41% for the first example embodiment, 82.60% for the second example embodiment, 82.44% for the third example embodiment, and 82.21% for the fourth example embodiment.

The efficiency of exergy $\eta3$ is known as between about 70% and about 75% for the conventional reversible water electrolysis system at the SOEC mode. Thus, the system efficiency of the example embodiments of the present invention may be increased compared to the conventional reversible water electrolysis system.

In addition, the efficiency of exergy $\eta3$ was calculated for each of the first to fourth example embodiments of the present invention at the SOFC mode. Here, the efficiency of exergy $\eta3$ is 53.83% for each of the first and second example embodiments, but the efficiency of exergy $\eta3$ is 66.85% for the third example embodiment and 58.89% for the fourth example embodiment. Since the waste energy of the fuel cell is recycled to heat the air supplied to the air pole 32 and the power consumption of the second heater 62 is decreased in the third and fourth example embodiments, the energy efficiency is more increased in the third and fourth example embodiments, compared to the first and second example embodiments.

According to the present example embodiments, the water is separated from the exhaust gas exhausted from the hydrogen pole of the fuel cell and then the water is discharged using the drain pump. Here, the operation of the drain pump is properly controlled to maintain a pressure difference between the inlet of the hydrogen pole of the fuel cell and the inlet of the air pole within a predetermined range, so that the fuel cell may be operated stably and more efficiently.

In addition, the exhaust gas exhausted from the air pole is partially resupplied to the air pole, or the exhaust gas exhausted from the air pole is heated using the exhaust gas from the hydrogen pole, so that a balance of plant (BOP) may be minimized and power consumption may be decreased to enhance an efficiency of the system.

In addition, an exhaust gas from the hydrogen pole is partially used as a fuel of the catalytic combustor so as for heating the exhaust gas of the air pole, so that the temperature of the exhaust gas of the air pole is increased and an increased energy is transmitted to the air. Thus, power consumption of a heat for heating the air supplied to the air pole may be decreased and system efficiency may be increased.

Although the exemplary embodiments of the present invention have been described, it is understood that the present invention should not be limited to these exemplary embodiments but various changes and modifications can be made by one ordinary skilled in the art.

**Claims**

1.  A reversible water electrolysis system comprising:

    a reversible water electrolysis fuel cell 30 having a hydrogen pole, an air pole and an electrolyte disposed between the hydrogen pole and the air pole, wherein the reversible water electrolysis fuel cell is configured to be operated at one of a water electrolysis mode and a fuel cell mode;
    a first heat exchanger 41 configured to exchange a heat between a first exhaust gas exhausted from the hydrogen pole and a hydrogen or a mixed gas including the hydrogen and a steam, wherein the hydrogen or the mixed gas is supplied to the hydrogen pole;

a steam supply passage L21 configured to supply the steam to the hydrogen pole;

a water discharger configured to removing a water from the first exhaust gas; and

a pump equipped to a water discharge passage L43 of the water discharge and configured to pump the water to outside,

wherein the pump is configured to maintain a pressure difference between an inlet of the hydrogen pole and an inlet of the air pole within a predetermined range.

2. The reversible water electrolysis system of claim 1, further comprising:

a recycling passage L44 configured to at least partially resupply a gas passing through the water discharger to the hydrogen pole as a recycling gas;

a second heat exchanger 42 equipped to the recycling passage and configured to exchange a heat between the recycling gas and the first exhaust gas; and

a blower 45 disposed at a downstream of the second heat exchanger 42 along the recycling passage.

3. The reversible water electrolysis system of claim 2, wherein the second heat exchanger 42 is configured to increase a temperature of the recycling gas to be a predetermined range.

4. The reversible water electrolysis system of claim 2, further comprising:

a third heat exchanger 43 configured to exchange a heat between an outer supply water supplied from outside and the first exhaust gas,

wherein the outer supply water evaporated to be the steam at the third heat exchanger 43 inflows to the steam supply passage L21.

5. The reversible water electrolysis system of claim 4, wherein a conflux between the steam supply passage L21 and a hydrogen supply passage L11 supplying the hydrogen to the hydrogen pole is disposed between the first heat exchanger 41 and the hydrogen pole, or at a front side of the first heat exchanger.

6. The reversible water electrolysis system of claim 4, further comprising:

first and second blowers 51 and 52 connected in parallel with an air supply passage L53 which supplies the air to the air pole; and

a fourth heat exchanger 53 configured to exchange a heat between the air supplied to the air pole via the air supply passage L53 and a second exhaust gas exhausted at the air pole,

wherein the second blower is configured to supply the air more than the first blower.

7. The reversible water electrolysis system of claim 6, further comprising:

a feedback passage L62 configured to connect the air supply passage with an exhaust passage of the air pole; and

a third blower 55 equipped to the feedback passage,

wherein the second exhaust gas is partially recycled to the air pole via the feedback passage L62.

8. The reversible water electrolysis system of claim 7, wherein the first blower is operated at the water electrolysis mode, and the second blower and the third blower are operated at the fuel cell mode.

9. The reversible water electrolysis system of claim 6, further comprising:

a bifurcation passage L46 configured to partially bifurcate the first exhaust gas, to supply the bifurcated first exhaust gas to an exhaust passage of the air pole; and

a catalytic combustor 57 equipped at a conflux between the bifurcation passage and the exhaust passage of the air pole,

wherein the catalytic combustor heats the second exhausted from the air pole.

10. The reversible water electrolysis system of claim 9, wherein the bifurcation passage L46 is closed at the water electrolysis mode, and the bifurcation passage L46 is open at the fuel cell mode.

11. A method for operating a reversible water electrolysis system, the reversible water electrolysis system being operated at a water electrolysis mode and a fuel cell mode using a reversible water electrolysis fuel cell having a hydrogen pole and an air pole, the method comprising:

exchanging a heat between a first exhaust gas and a hydrogen so as to heat the hydrogen using the first exhaust gas, at a first heat exchanger;
separating a water from the first exhaust gas passing through the first heat exchanger;
discharging the separated water to outside using a drain pump; and
at least partially recycling the first exhaust gas from which the water is removed to the hydrogen pole as a recycling gas.

12. The method of claim 11, wherein in the discharging the separated water,
an operation of the drain pump is controlled to maintain a pressure difference between an inlet of the hydrogen pole and an inlet of the air pole within a predetermined range.

13. The method of claim 11, wherein a second heat exchanger 42 and a blower 45 are sequentially equipped along a passage for recycling the recycling gas,
wherein the second heat exchanger exchanges a heat between the recycling gas and the first exhaust gas passing through the first heat exchanger, to heat the recycling gas.

14. The method of claim 13, further comprising:

exchanging a heat between an air supplied from one of first and second blowers and a second exhaust gas exhausted from the air pole, to heat the air, wherein a capacity of the second blower is larger than that of the first blower;
supplying the heated air to the air pole; and
at least partially resupplying the second exhaust gas exhausted from the air pole to the air pole, using a third blower.

15. The method of claim 13, further comprising:

exchanging a heat between an air supplied from one of first and second blowers and a second exhaust gas exhausted from the air pole, to heat the air, wherein a capacity of the second blower is larger than that of the first blower;
supplying the heated air to the air pole;
partially bifurcating the first exhaust gas exhausted from the hydrogen pole via a bifurcation passage, to interflow to the second exhaust gas; and
heating the second exhaust gas mixed with the first exhaust gas, using a catalytic combustor.

**Patentansprüche**

1. Reversibles Wasserelektrolysesystem, umfassend:

Eine reversible Wasserelektrolyse-Brennstoffzelle 30 mit einem Wasserstoffpol, einem Luftpol und einem Elektrolyten, der zwischen dem Wasserstoffpol und dem Luftpol angeordnet ist, wobei die reversible Wasserelektrolyse-Brennstoffzelle konfiguriert ist, entweder in einem Wasserelektrolyse- oder Brennstoffzellenmodus betrieben zu werden;
einen ersten Wärmetauscher 41, der konfiguriert ist, eine Wärme zwischen einem ersten Abgas, das von dem Wasserstoffpol abgegeben wird, und einem Wasserstoff oder Mischgas, das den Wasserstoff und einen Dampf beinhaltet, auszutauschen, wobei der Wasserstoff oder das Mischgas an den Wasserstoffpol geliefert werden;
einen Dampfzufuhrkanal L21, der konfiguriert ist, den Dampf zu dem Wasserstoffpol zu leiten;
eine Wasserableitungsvorrichtung, die konfiguriert ist, Wasser aus dem ersten Abgas zu entfernen; und
eine Pumpe, die an einem Wasserableitungskanal L43 der Wasserableitungsvorrichtung angebracht und konfiguriert ist, das Wasser nach außen zu pumpen,
wobei die Pumpe konfiguriert ist, eine Druckdifferenz zwischen einem Einlass des Wasserstoffpols und einem Einlass des Luftpols innerhalb eines vorbestimmten Bereichs zu halten.

2. Reversibles Wasserelektrolysesystem nach Anspruch 1, ferner umfassend:

Einen Rückführungskanal L44, der konfiguriert ist, ein Gas, das durch die Wasserableitungsvorrichtung zu dem Wasserstoffpol läuft, mindestens teilweise erneut zu dem Wasserstoffpol als Rückführungsgas zu leiten; einen zweiten Wärmetauscher 42, der mit dem Rückführungskanal verbunden und konfiguriert ist, eine Wärme zwischen dem Rückführungsgas und dem ersten Abgas auszutauschen; und ein Gebläse 45, das dem zweiten Wärmetauscher 42 entlang des Rückführungskanals nachgeschaltet angeordnet ist.

3.  Reversibles Wasserelektrolysesystem nach Anspruch 2, wobei der zweite Wärmetauscher 42 konfiguriert ist, eine Temperatur des Rückführungsgases auf einen vorbestimmten Bereich zu erhöhen.

4.  Reversibles Wasserelektrolysesystem nach Anspruch 2, ferner umfassend:

    Einen dritten Wärmetauscher 43, der konfiguriert ist, eine Wärme zwischen einem von außen zugeführten Wasser und dem ersten Abgas auszutauschen, wobei das von außen zugeführte Wasser, das am dritten Wärmetauscher 43 verdampft wird, in den Dampfzufuhrkanal L21 strömt.

5.  Reversibles Wasserelektrolysesystem nach Anspruch 4, wobei ein Zusammenfluss zwischen dem Dampfzufuhrkanal L21 und einem Wasserstoffzufuhrkanal LII, der Wasserstoff zum Wasserstoffpol leitet, zwischen dem ersten Wärmetauscher 41 und dem Wasserstoffpol oder an einer Vorderseite des ersten Wärmetauschers angeordnet ist.

6.  Reversibles Wasserelektrolysesystem nach Anspruch 4, ferner umfassend:

    Erstes und zweites Gebläse 51 und 52, die parallel mit einem Luftzufuhrkanal L53 verbunden sind, der die Luft zum Luftpol leitet; und einen vierten Wärmetauscher 53, der konfiguriert ist, eine Wärme zwischen der über den Luftzufuhrkanal L53 zum Luftpol geleiteten Luft und einem zweiten am Luftpol abgegebenen Abgas auszutauschen, wobei das zweite Gebläse konfiguriert ist, mehr Luft zu liefern als das erste Gebläse.

7.  Reversibles Wasserelektrolysesystem nach Anspruch 6, ferner umfassend:

    Einen Rückführungskanal L62, der konfiguriert ist, den Luftzufuhrkanal mit einem Abgaskanal des Luftpols zu verbinden; und ein drittes Gebläse 55, das am Rückführungskanal angebracht ist, wobei das zweite Abgas teilweise über den Rückführungskanal zum Luftpol L62 zurückgeleitet wird.

8.  Reversibles Wasserelektrolysesystem nach Anspruch 7, wobei das erste Gebläse im Wasserelektrolysemodus betrieben wird und das zweite Gebläse und das dritte Gebläse im Brennstoffzellenmodus betrieben werden.

9.  Reversibles Wasserelektrolysesystem nach Anspruch 6, ferner umfassend:

    Einen Verzweigungskanal L46, der konfiguriert ist, das erste Abgas teilweise zu verzweigen, um das erste verzweigte Abgas zu einem Abgaskanal des Luftpols zu leiten; und eine katalytische Brennkammer 57, die an einem Zusammenfluss zwischen dem Verzweigungskanal und dem Abgaskanal des Luftpols angebracht ist, wobei die katalytische Brennkammer das zweite Abgas von dem Luftpol aufwärmt.

10. Reversibles Wasserelektrolysesystem nach Anspruch 9, wobei der Verzweigungskanal L46 im Wasserelektrolysemodus geschlossen und der Verzweigungskanal L46 im Brennstoffzellenmodus geöffnet ist.

11. Verfahren für das Betreiben eines reversiblen Wasserelektrolysesystems, das reversible Wasserelektrolysesystem wird dabei in einem Wasserelektrolysemodus und einem Brennstoffzellenmodus unter Einsatz einer reversiblen Wasserelektrolyse-Brennstoffzelle mit einem Wasserstoffpol und einem Luftpol betrieben, das Verfahren umfassend:

    Austauschen einer Wärme zwischen einem ersten Abgas und einem Wasserstoff, um den Wasserstoff mit dem ersten Abgas an einem ersten Wärmetauscher aufzuwärmen; Trennen eines Wassers von dem ersten Abgas, das durch den ersten Wärmetauscher strömt;

Ableiten des getrennten Wassers über eine Drainagepumpe nach außen; und

mindestens teilweise Rückführen des ersten Abgases, aus dem das Wasser entfernt wurde, zu dem Wasserstoffpol als Kreislaufgas.

12. Verfahren nach Anspruch 11, wobei beim Ableiten des abgeschiedenen Wassers ein Betrieb einer Drainagepumpe gesteuert wird, um eine Druckdifferenz zwischen einem Einlass des Wasserstoffpols und einem Einlass des Luftpols innerhalb eines vorbestimmten Bereichs zu halten.

13. Verfahren nach Anspruch 11, wobei ein zweiter Wärmetauscher 42 und ein Gebläse 45 sequentiell entlang eines Kanals für die Rückführung des Kreislaufgases angebracht sind,

wobei der zweite Wärmetauscher eine Wärme zwischen dem Kreislaufgas und dem ersten Abgas, das durch den ersten Wärmetauscher strömt, austauscht, um das Kreislaufgas zu wärmen.

14. Verfahren nach Anspruch 13, ferner umfassend:

Austauschen einer Wärme zwischen einer von dem ersten oder dem zweiten Gebläse gelieferten Luft und einem aus dem Luftpol abgeleiteten zweiten Abgas, um die Luft zu wärmen, wobei eine Kapazität des zweiten Gebläses größer ist als die des ersten Gebläses;

Leiten der erwärmten Luft zum Luftpol; und

mindestens teilweise unter Einsatz eines dritten Gebläses erneutes Leiten des aus dem Luftpol abgeleiteten zweiten Abgases zum Luftpol.

15. Verfahren nach Anspruch 13, ferner umfassend:

Austauschen einer Wärme zwischen einer von dem ersten oder dem zweiten Gebläse gelieferten Luft und einem aus dem Luftpol abgeleiteten zweiten Abgas, um die Luft zu wärmen, wobei eine Kapazität des zweiten Gebläses größer ist als die des ersten Gebläses;

Leiten der erwärmten Luft zum Luftpol;

Teilweises Verzweigen des aus dem Wasserstoffpol abgeleiteten ersten Abgases über einen Verzweigungskanal, um zum zweiten Abgas zwischenzufließen; und

Wärmen des mit dem ersten Abgas gemischten zweiten Abgases unter Verwendung einer katalytischen Brennkammer.

**Revendications**

1. Système d'électrolyse de l'eau réversible comprenant :

une pile à combustible par électrolyse de l'eau réversible 30 présentant un pôle hydrogène, un pôle air et un électrolyte disposé entre le pôle hydrogène et le pôle air, dans lequel la pile à combustible par électrolyse de l'eau réversible est conçue pour fonctionner selon un mode parmi un mode électrolyse de l'eau et un mode pile à combustible ;

un premier échangeur de chaleur 41 conçu pour échanger de la chaleur entre un premier gaz d'échappement évacué du pôle hydrogène et un hydrogène ou un mélange gazeux comportant l'hydrogène et une vapeur, dans lequel l'hydrogène ou le mélange gazeux est fourni au pôle hydrogène ;

un passage d'alimentation en vapeur L21 conçu pour fournir de la vapeur au pôle hydrogène ;

un dispositif d'évacuation d'eau conçu pour éliminer l'eau du premier gaz d'échappement ; et

une pompe équipée d'un passage d'évacuation d'eau L43 de l'évacuation d'eau et conçue pour pomper l'eau vers l'extérieur,

dans lequel la pompe est conçue pour maintenir une différence de pression entre une entrée du pôle hydrogène et une entrée du pôle air à l'intérieur d'une plage prédéfinie.

2. Système d'électrolyse de l'eau réversible selon la revendication 1, comprenant en outre :

un passage de recyclage L44 conçu pour réalimenter au moins partiellement un gaz passant à travers le dispositif d'évacuation d'eau vers le pôle hydrogène en tant que gaz de recyclage ;

un deuxième échangeur de chaleur 42 équipé du passage de recyclage et conçu pour échanger de la chaleur entre le gaz de recyclage et le premier gaz d'échappement ; et

une soufflante 45 disposée en aval du deuxième échangeur de chaleur 42 le long du passage de recyclage.

3. Système d'électrolyse de l'eau réversible selon la revendication 2, dans lequel le deuxième échangeur de chaleur 42 est conçu pour augmenter une température du gaz de recyclage pour être dans une plage prédéfinie.

4. Système d'électrolyse de l'eau réversible selon la revendication 2, comprenant en outre :

un troisième échangeur de chaleur 43 conçu pour échanger de la chaleur entre une eau d'alimentation extérieure fournie de l'extérieur et le premier gaz d'échappement,
dans lequel l'eau d'alimentation extérieure évaporée pour être de la vapeur au niveau du troisième échangeur de chaleur 43 arrive dans le passage d'alimentation en vapeur L21.

5. Système d'électrolyse de l'eau réversible selon la revendication 4, dans lequel une confluence entre le passage d'alimentation en vapeur L21 et un passage d'alimentation en hydrogène L11 fournissant l'hydrogène au pôle hydrogène est disposé entre le premier échangeur de chaleur (41) et le pôle hydrogène, ou sur un côté avant du premier échangeur de chaleur.

6. Système d'électrolyse de l'eau réversible selon la revendication 4, comprenant en outre :

des première et deuxième soufflantes 51 et 52 sont raccordées en parallèle avec un passage d'alimentation en air L53 qui fournit l'air au pôle air ; et
un quatrième échangeur de chaleur 53 conçu pour échanger de la chaleur entre l'air fourni au pôle air par l'intermédiaire du passage d'alimentation en air L53 et un second gaz d'échappement évacué au niveau du pôle air,
dans lequel la deuxième soufflante est conçue pour fournir plus d'air que la première soufflante.

7. Système d'électrolyse de l'eau réversible selon la revendication 6, comprenant en outre :

un passage de rétroaction L62 conçu pour raccorder le passage d'alimentation en air avec un passage d'échappement du pôle air ; et
une troisième soufflante 55 équipée du passage de rétroaction,
dans lequel le second gaz d'échappement est partiellement recyclé vers le pôle air par l'intermédiaire du passage de rétroaction L62.

8. Système d'électrolyse de l'eau réversible selon la revendication 7, dans lequel la première soufflante fonctionne en mode électrolyse de l'eau, et la deuxième soufflante et la troisième soufflante fonctionnent en mode pile à combustible.

9. Système d'électrolyse de l'eau réversible selon la revendication 6, comprenant en outre :

un passage de bifurcation L46 conçu pour bifurquer partiellement le premier gaz d'échappement, pour fournir le premier gaz d'échappement bifurqué à un passage d'échappement du pôle air ; et
une chambre de combustion catalytique 57 équipée au niveau d'une confluence entre le passage de bifurcation et le passage d'échappement du pôle air,
dans lequel la chambre de combustion catalytique chauffe le second gaz d'échappement évacué du pôle air.

10. Système d'électrolyse de l'eau réversible selon la revendication 9, dans lequel le passage de bifurcation L46 est fermé en mode électrolyse de l'eau et le passage de bifurcation L46 est ouvert en mode pile à combustible.

11. Procédé destiné à faire fonctionner un système d'électrolyse de l'eau réversible, le système d'électrolyse de l'eau réversible fonctionnant en mode électrolyse de l'eau et en mode pile à combustible à l'aide d'une pile à combustible par électrolyse de l'eau réversible présentant un pôle hydrogène et un pôle air, le procédé comprenant :

l'échange de chaleur entre un premier gaz d'échappement et un hydrogène de manière à chauffer l'hydrogène à l'aide du premier gaz d'échappement, au niveau d'un premier échangeur de chaleur ;
la séparation d'une eau provenant du premier gaz d'échappement passant à travers le premier échangeur de chaleur ;
l'évacuation de l'eau séparée vers l'extérieur à l'aide d'une pompe de vidange ; et

le recyclage au moins partiellement du premier gaz d'échappement duquel l'eau est éliminée vers le pôle hydrogène en tant que gaz de recyclage.

**12.** Procédé selon la revendication 11 dans lequel l'évacuation de l'eau séparée, un fonctionnement de la pompe de vidange est commandé pour maintenir une différence de pression entre une entrée du pôle hydrogène et une entrée du pôle air à l'intérieur d'une plage prédéfinie.

**13.** Procédé selon la revendication 11, dans lequel un deuxième échangeur de chaleur 42 et une soufflante 45 sont installés séquentiellement le long d'un passage destiné à recycler le gaz de recyclage.
dans lequel le deuxième échangeur de chaleur échange une chaleur entre le gaz de recyclage et le premier gaz d'échappement passant à travers le premier échangeur de chaleur, afin de chauffer le gaz de recyclage.

**14.** Procédé selon la revendication 13, comprenant en outre :

l'échange de chaleur entre un air fourni par l'un parmi les première et deuxième soufflantes et un second gaz d'échappement évacué du pôle air, pour chauffer l'air, dans lequel la capacité de la deuxième soufflante est supérieure à celle de la première soufflante ;
la fourniture de l'air chauffé au pôle air ; et
au moins partiellement, la réalimentation du second gaz d'échappement évacué du pôle air vers le pôle air à l'aide d'une troisième soufflante.

**15.** Procédé selon la revendication 13, comprenant en outre :

l'échange de chaleur entre un air fourni par l'un parmi les première et deuxième soufflantes et un second gaz d'échappement évacué du pôle air, pour chauffer l'air, dans lequel la capacité de la deuxième soufflante est supérieure à celle de la première soufflante ;
la fourniture de l'air chauffé au pôle air ;
la bifurcation partiellement du premier gaz d'échappement évacué du pôle hydrogène par l'intermédiaire d'un passage de bifurcation, pour confluer dans le second gaz d'échappement ; et
le chauffage du second gaz d'échappement mélangé avec le premier gaz d'échappement, à l'aide d'une chambre de combustion catalytique.

# FIG. 1

EP 3 869 599 B1

# FIG. 2

# FIG. 3

# FIG. 4

EP 3 869 599 B1

FIG. 5

FIG. 6

FIG. 7

# FIG. 8

EP 3 869 599 B1

FIG. 9

EP 3 869 599 B1

FIG. 10

FIG. 11

FIG. 12

**EP 3 869 599 B1**

**REFERENCES CITED IN THE DESCRIPTION**

**Patent documents cited in the description**

- KR 101925290 B1
- KR 20090108104 A